Europäisches Patentamt

**European Patent Office**

Office européen des brevets

(19)

(11) Veröffentlichungsnummer: **0 014 751**
**B1**

(12) **EUROPÄISCHE PATENTSCHRIFT**

(45) Veröffentlichungstag der Patentschrift:
**13.04.83**

(51) Int. Cl.³: **H 02 G 15/06**

(21) Anmeldenummer: **79104783.0**

(22) Anmeldetag: **30.11.79**

(54) **Hochspannungs-Verbindungsvorrichtung.**

(30) Priorität: **23.02.79 DE 7905050 U**
**13.09.79 DE 2937058**

(43) Veröffentlichungstag der Anmeldung:
**03.09.80 Patentblatt 80/18**

(45) Bekanntmachung des Hinweises auf die Patenterteilung:
**13.04.83 Patentblatt 83/15**

(84) Benannte Vertragsstaaten:
**AT BE CH FR GB IT NL SE**

(56) Entgegenhaltungen:
**AT-B-345 007**
**DE-A-2 312 897**
**DE-B-1 076 214**
**DE-B-1 207 464**
**DE-U-7 905 050**
**FR-A-1 259 452**
**GB-A-859 443**
**GB-A-1 131 841**
**US-A-3 784 722**

(73) Patentinhaber: **Karl Pfisterer Elektrotechnische Spezialartikel GmbH & Co. KG, Augsburger Strasse 375, D-7000 Stuttgart 60 (DE)**

(72) Erfinder: **Höckele, Max, Fichtenstrasse 3, D-7061 Berglen-Steinach (DE)**

(74) Vertreter: **Bartels, Hans et al, Patentanwälte Bartels, Held, Wolff Lange Strasse 51, D-7000 Stuttgart 1 (DE)**

Hochspannungs-Verbindungsvorrichung

Die Erfindung betrifft eine Verbindungsvorrichtung für ein Hohlkabel gemäß dem Oberbegriff des Patentanspruchs 1.

Eine bekannte Verbindungsvorrichtung dieser Art (FR-A-1 259 452) ist für ein Kabel einer Schweißmaschine, also ein Kabel bestimmt, das einen hohen Strom bei relativ geringer Spannung zu führen hat, weshalb durch das Hohlkabel und durch den Zwischenraum zwischen seinen Leitern und eines diese im Abstand umgebenden Schlauches Kühlwasser hindurchgeleitet wird. Die Kontakthülse des Kontaktkörpers dieser vorbekannten Verbindungsvorrichtung weist in ihrer Innenmantelfläche Vertiefungen auf, die einen schraubenförmigen Verlauf haben. In diese Vertiefungen werden mittels einer im Inneren des Hohlkabels angeordneten, schraubenförmigen Feder die Leiter des Kabels hineingedrückt, um das Kabelende in der Kontakthülse festzulegen. Die Kraft, mit der die Schraubenfeder die Leiter des Hohlkabels in die Vertiefungen drücken soll, wird auf die Schraubenfeder mittels einer konischen Hülse ausgeübt, die sich an eine zylindrische, mit einem Außengewinde versehene Hülse anschließt und von dem offenen Ende des Kontaktbolzens aus in das Hohlkabel eingeführt wird. Dieses Einführen der konischen Hülse, die sich zu ihrem freien, in das Hohlkabel hineinweisenden Ende hin verjüngt, erfolgt dadurch, daß die sich anschließende zylindrische Hülse in ein Innengewinde des Kontaktbolzens eingedreht wird. Nachteilig ist bei dieser Verbindungsvorrichtung in erster Linie, daß die konische Hülse in das Hohlkabel hineingedrückt wird und dabei auf die an ihrer Außenmantelfläche anliegende Schraubenfeder sowie über diese auf die Leiter des Hohlkabels eine Kraft ausübt im Sinne einer Verschiebung aus der Kontakthülse heraus. Nachteilig ist aber auch, daß die Schraubenfeder sich in demjenigen Abschnitt, der bereits festgeklemmt ist, nicht mehr aufweisen läßt, was es erschwert, auf die Leiter des Hohlkabels einen ausreichend hohen, radial nach außen wirkenden Druck auszuüben. Ferner ist bei einer axialen Verschiebung der Schraubenfeder nicht mehr gewährleistet, daß diese die Leiter des Hohlkabels gerade in denjenigen Bereichen nach außen drücken, welche auf die Vertiefungen in der Kontakthülse ausgerichtet sind. Sofern die Leiter des Hohlkabels eine relativ geringe Flexibilität haben, wie dies beispielsweise bei Hochspannungskabeln der Fall ist, muß deshalb damit gerechnet werden, daß sich keine zuverlässige Verbindung zwischen dem Kabel und der Verbindungsvorrichtung herstellen läßt.

Der Nachteil, daß ein in das Kabel hineinzudrückender Konus oder Klemmkörper auf das Kabel eine im Sinne eines Herausbewegens aus der Kontakthülse wirkende Kraft ausübt, mit dem auch andere bekannte Verbindungsvorrichtungen, welche einen derartigen Klemmkörper verwenden, behaftet sind, läßt sich zwar weitgehend vermeiden, wenn wie bei einer bekannten Verbindungsvorrichtung für ein SF6-isoliertes Hohlkabel (DE-A-2 312 897) die Kontakthülse sich zu ihrem freien Ende hin konisch erweitert und das Kabel in der Kontakthülse mittels einer Klemmhülse festgeklemmt wird, deren zylindrische Innenmantelfläche am Kabel und deren konische Außenmantelfläche an der Innenmantelfläche der Kontakthülse anliegt. Hier wird nämlich beim Hineindrücken der Klemmhülse in die Kontakthülse auf das Kabel eine im Sinne des Einführens in die Kontakthülse wirkende Kraft ausgeübt. Allerdings muß hierfür in Kauf genommen werden, daß das Kabel nicht unmittelbar an der Kontakthülse anliegt, was die Kontaktqualität beeinträchtigt, und daß eine sichere Verbindung nur dann zu erzielen ist, wenn nicht vergessen wird, in das Kabel einen passenden Stützkörper einzusetzen.

Der Erfindung liegt die Aufgabe zugrunde, eine Verbindungsvorrichtung für ein Hohlkabel zu schaffen, die auch für Hochspannungskabel geeignet ist und es ermöglicht, eine sichere Verbindung mit Hilfe einer konischen Hülse herzustellen, ohne in das Kabel einen Stützkörper oder dergleichen einführen zu müssen. Diese Aufgabe löst eine Verbindungsvorrichtung mit den Merkmalen des Anspruchs 1.

Bei dieser Lösung weitet der im montierten Zustand im Inneren des Hohlkabels liegende Ziehkonus dann, wenn er zum Zwecke des Festklemmens des Kabels in der Kontakthülse gegen den Kontaktbolzen hin gezogen wird, nicht nur das Kabel in radialer Richtung auf. Er übt außerdem auf das Kabel noch eine Kraft aus, welche das Kabel in die Kontakthülse hineinzuziehen sucht. Die Verbindungsvorrichtung kann sich deshalb nicht vom Kabel lösen. Außerdem läßt sich zwischen dem Kabel und der Kontakthülse ein Kontakt hoher Qualität erzielen, weil die Leiter des Kabels direkt an die Innenwandung der Kontakthülse angepreßt werden können, und zwar mit einer hohen Kraft, die nur von der Zugkraft abhängt, mit der der Ziehkonus in axialer Richtung beim Spannen belastet wird. Die unmittelbare Anlage der Leiter des Kabels an der Kontakthülse ist auch im Hinblick auf den Raumbedarf der Verbindungsvorrichtung vorteilhaft.

Bevorzugte Ausgestaltungen der erfindungsgemäßen Verbindungsvorrichtung sind Gegenstand der Unteransprüche.

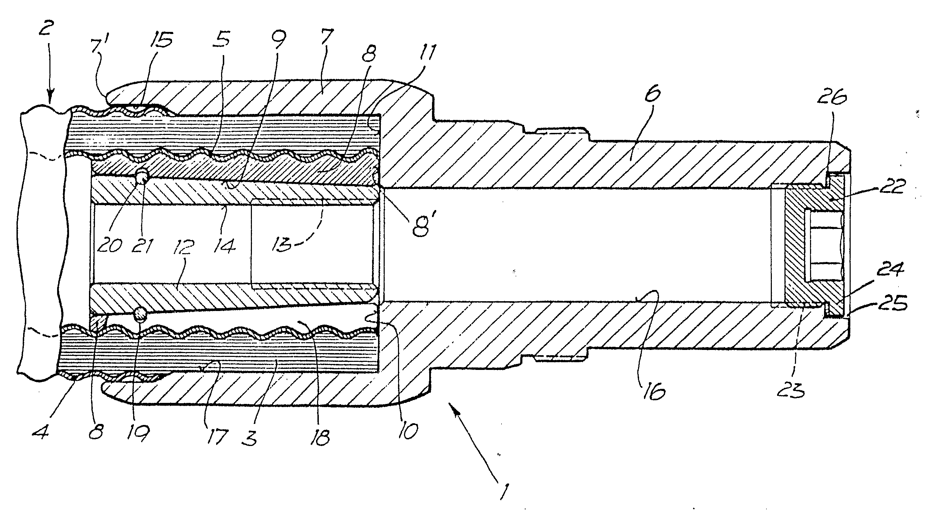

Die Erfindung ist an Hand eines in der Zeichnung dargestellten Ausführungsbeispiels im einzelnen erläutert. Die einzige Figur zeigt einen Schnitt durch das Ausführungsbeispiel.

Ein Klemmenkörper 1 einer Hochspannungs-Verbindungsvorrichtung für ein SF 6-isoliertes Kabel 2, dessen Leiter 3 zwischen einem Außenmantel 4 und einen konzentrisch zu diesem angeordneten Innenmantel 5 liegen, weist an seinem einen Ende einen in seinem Endbereich zylindrischen Kontaktbolzen 6 und an seinem anderen Ende eine Kontakthülse 7, auf, die mit durchgehenden zylindrischen Längsbohrungen 16 bzw. 17 versehen sind.

Die Wandung der Bohrung 17 ist mit Zähnen oder Schneiden versehen, welche beispielsweise parallel zur Bohrungslängsachse verlaufen.

Der Kontaktbolzen 6 und die Hülse 7 sind gleichachsig zueinander ausgeführt. Der Außen- und der Innendurchmesser der außen zylindrischen, aus einem elektrisch gut leitenden Werkstoff bestehenden Hülse 7 sind größer als der Außen- bzw. Innendurchmesser des Kontaktbolzens 6, so daß sich zwischen der Bohrung 17 und der engeren Bohrung 16 eine Schulter 10 bildet, deren radiale Breite größer ist als die radial gemessene Dicke der Leiter 3 und des Innenmantels 5.

Für den vom Innenmantel 5 des Kabels 2 begrenzten Hohlraum ist eine aus einem elektrisch gut leitenden Werkstoff bestehende Klemmhülse 8 vorgesehen. Diese ist mit einer sich zum Ende des Kabels 2 hin verjüngenden kegelstumpfförmigen Innenmantelfläche 9 versehen.

Die Außenmantelfläche der Klemmhülse 8 trägt ein Rundgewinde, das an die schraubenförmig umlaufende Vertiefung des wellenförmigen Kabel-Innenmantels 5 angepaßt ist. Die Klemmhülse 8 wird vom Kabelende her so weit in den vom Innenmantel 5 begrenzten Innenraum des Kabels 2 eingeschraubt, bis ihre Stirnfläche 8' am verjüngten Ende ihrer Innenfläche 9 im wesentlichen mit der Stirnfläche 11 des Kabelendes fluchtet. An die Innenmantelfläche 9 der Klemmhülse 8 ist die kegelstumpfförmige Außenmantelfläche eines Ziehkonus 12 angepaßt, dessen kleinster Durchmesser im wesentlichen dem Durchmesser der Bohrung 16 des Kontaktbolzens 6 entspricht. Der Ziehkonus 12 weist an seinem verjüngten Ende eine Gewindebohrung 13 auf, die im Ausführungsbeispiel als Feingewindebohrung ausgebildet ist und in eine gleichachsige glatte Bohrung 14 übergeht, so daß die Länge des Feingewindes der maximal zu erwartenden Belastung anpaßbar ist; auch ist seine verjüngte Stirnfläche abgerundet.

Die Kontakthülse 7 besitzt eine mit ihrer Bohrung 17 gleichachsige Ausdrehung 15, die in die Stirnfläche 7' der Kontakthülse mündet. Der Durchmesser der Ausdrehung 15 ist größer als der Außendurchmesser des Kabel-Außenmantels 4.

Die Klemmhülse 8 weist Längsschlitze 18 auf, welche ihr ein elastisches Formänderungsvermögen verleihen. Vorteilhafterweise kann so der Anpreßdruck der Klemmhülse 8 an den Innenmantel 5 des Kabels 2 erhöht werden, je tiefer der Ziehkonus 12 in die Klemmhülse 8 eingeführt wird. Die Leiter 3 des Kabels 2 werden dann an die Innenmantelfläche der Bohrung 17 angepreßt, so daß ein guter und dauerhafter elektrischer Kontakt zwischen dem Kabel 2 und

dem Klemmenkörper 1 entsteht.

Vor der Montage des Kabelendes wird zuerst der Außenmantel 4 auf einer Länge entfernt, die um die Tiefe der Ausdrehung 15 kleiner ist als die axiale Tiefe der Bohrung 17. Nun wird vom Monteur der Ziehkonus 12 in die Klemmhülse 8 eingeschoben. Diese wird dann in den vom Kabelinnenmantel 5 begrenzten Hohlraum eingeschraubt.

Im nächsten Arbeitsgang wird das mit der Klemmhülse 8 und dem Ziehkonus 12 versehene Kabelende in die Bohrung 17 der Kontakthülse 7 eingeschoben, bis die Stirnfläche 11 des Kabelendes und die Stirnfläche 8' der Klemmhülse 8 an der die Bohrung 17 abschließenden Schulter 10 anliegen. Die Ausdrehung 15 nimmt dabei den Kabel-Außenmantel 4 auf.

Nun kann vom Monteur durch die Bohrung 16 des Kontaktbolzens 6 ein in der Zeichnung nicht dargestellter Spannbolzen eingeführt werden, dessen eingeführtes Ende ein mit dem Gewinde der Bohrung 13 des Ziehkonus 12 korrespondierendes Außengewinde aufweist und dessen anderes Ende mit einer mechanisch, elektrisch oder hydraulisch betätigbaren, nicht dargestellten Spannvorrichtung verbunden ist.

Beim Betätigen dieser Spannvorrichtung wird der Ziehkonus 12 in die Klemmhülse 8 gezogen, wobei die Konizität der aneinander anliegenden Flächen des Ziehkonus 12 und der Klemmhülse 8 eine sehr hohe Klemmkraft in radialer Richtung bewirkt. Damit ist gewährleistet, daß die Leiter 3 des Kabels 2 unmittelbar an die Innenmantelfläche der Bohrung 17 der Kontakthülse 7 gepreßt werden und ein guter und dauerhafter elektrischer Kontakt entsteht. Um ein selbsttätiges Lösen der Klemmverbindung zu verhindern, sind beim dargestellten Ausführungsbeispiel in der Innenfläche 9 der Klemmhülse 8 und in der Außenfläche des Ziehkonus 12 Ringnuten 19 bzw. 20 für einen O-Ring 21 vorgesehen, der den Ziehkonus 12 in der Klemmhülse 8 in der Klemmstellung verriegelt.

Zum Verschließen der äußeren Öffnung der Bohrung 16 des Kontaktbolzens 6 ist ein Verschlußstopfen 22 vorgesehen, der zum Einschrauben in ein Innengewinde der Bohrung 16 mit einem Außengewinde 23 versehen ist. Der Verschlußstopfen 22 weist einen Flanschrand 24 auf, der in eine Ausdrehung 25 der Bohrung 16 eingreift und mit einem Dichtring 26 versehen ist.

Beim dargestellten Ausführungsbeispiel ist zum Verbinden des Ziehkonus 12 mit der Spannvorrichtung ein Spannbolzen vorgesehen, der in die Gewindebohrung 13 des Ziehkonus einschraubbar ist. Anstelle der Gewindebohrung 13 kann am Ziehkonus auch ein anderer Verbindungsteil vorgesehen sein, der mit dem Ende eines durch die Bohrung 16 hindurchgesteckten Ziehteils der Spannvorrichtung verbindbar ist, z. B. ein diametral durch die Bohrung 14 hindurchgehender Stift, an dem ein Haken am Ende eines Seilstücks angreifen kann oder dergleichen.

## Patentansprüche

1. Verbindungsvorrichtung für ein Hohlkabel (2) mit einem Kontaktkörper (1), der an dem einen Ende als Kontaktbolzen (6) und an dem anderen Ende als Kontakthülse (7) ausgebildet ist, in die eine durchgehende Längsbohrung (16) des Kontaktbolzens (6) mündet und an deren Innenwandung das Ende des mit einem Außenmantel (4) versehenen Hohlkabels (2) mittels einer in den zentralen Hohlraum des Kabels (2) einführbaren, eine konische Außenmantelfläche aufweisenden konischen Hülse (12) sowie einem letztere umfassenden und sich an die Innenmantelfläche des Kabels anlegenden Bauteil (8) für die Kontaktierung anpreßbar ist, wobei die relativ zum Bauteil (8) und dem Kontaktkörper (1) längsverschiebbare konische Hülse (12) ein Verbindungsteil (13) zum Kuppeln mit einem für die Längsverschiebung erforderlichen Betätigungselement aufweist, dadurch gekennzeichnet, daß für ein gasisoliertes Hochspannungskabel (2), dessen Leiter (3) zwischen dem Außenmantel (4) und einem dazu koaxialen Innenmantel (5) liegen, die der Kontaktierung des Kabels dienende Innenmantelfläche (17) der Kontakthülse (7) als eine glatte, in ihrem Durchmesser an den Außendurchmesser des vom Außenmantel (4) befreiten Kabelendes angepaßte Bohrung und das Bauteil als eine Klemmhülse (8) mit kegelstumpfförmiger, an den Konus der konischen Hülse (12) angepaßter Innenmantelfläche (9) ausgebildet sind und daß die konische Hülse ein sich gegen den Kontaktbolzen (6) hin erstreckender Ziehkonus (12) ist, der mittels einer die Betätigungsvorrichtung bildenden, durch die Längsbohrung (16) des Kontaktbolzens (6) hindurchführbaren Spannvorrichtung zum Festklemmen des Kabelendes gegen das freie Ende des Kontaktbolzens (6) ziehbar ist.

2. Vorrichtung nach Patentanspruch 1, dadurch gekennzeichnet, daß für ein Kabel (2), dessen Innenmantel (5) mit wenigstens einer schraubenförmig umlaufenden Vertiefung versehen ist, die Außenmantelfläche der Klemmhülse (8) mit einem dieser Vertiefung angepaßten Gewinde versehen ist.

3. Vorrichtung nach Patentanspruch 1 oder 2, dadurch gekennzeichnet, daß als Verbindungsteil für die Verbindung mit einem Ziehbolzen der Spannvorrichtung, der mit einem Außengewinde versehen ist, im Ziehkonus (12) eine Gewindebohrung (13) vorgesehen ist.

4. Vorrichtung nach einem der Patentansprüche 1 bis 3, dadurch gekennzeichnet, daß der Hohlraum der Kontakthülse (7) als zylindrische Bohrung (17) ausgebildet ist.

5. Vorrichtung nach Patentanspruch 3 oder 4, dadurch gekennzeichnet, daß die Kontaktbolzenbohrung (16) und die Kontakthülsenbohrung (17), die Außen- und Innenmantelflächen (9) der Klemmhülse (8) sowie die Außenmantelfläche und die Gewindebohrung (13) des Ziehkonus (12) jeweils koaxial sind.

6. Vorrichtung nach einem der Ansprüche 1 bis 5, dadurch gekennzeichnet, daß für die äußere Öffnung der Kontaktbolzenbohrung (16) ein vorzugsweise einschraubbarer Verschlußstopfen (22) vorgesehen ist.

7. Vorrichtung nach einem der Ansprüche 1 bis 6, dadurch gekennzeichnet, daß die Kontakthülsenbohrung (17) in die engere Kontaktbolzenbohrung (16) über eine zur Längsachse des Kontaktkörpers (1) im wesentlichen senkrecht verlaufende Schulter (10) übergeht, deren radial gemessene Breite größer ist als die radial gemessene Dicke der Leiter (3) und des Innenmantels (5) des Kabels (2).

8. Vorrichtung nach einem der Ansprüche 1 bis 7, dadurch gekennzeichnet, daß zur Verriegelung des Ziehkonus (12) in der Klemmhülse (8) in der das Kabel (2) einspannenden Stellung ein in Ringnuten (19, 20) der Klemmhülse (8) und des Ziehkonus (12) eingreifender O-Ring (21) vorhanden ist.

## Claims

1. Connecting device for a hollow cable (2) with a contact body (1) which is constructed at one end as a contact stud (6) and at the other end as a contact sleeve (7) in which a continuous longitudinal bore (16) in the contact stud (6) terminates and on the inside walls of which it is possible to press that end of the hollow cable (2) which is provided with an outer casing (4) by means of a conical sleeve (12) which can be inserted the central cavity in the cable (2) and which has a conical outer casing face, and with, engaging over the latter and bearing on the inner casing face of the cable, a component part (8) for making contact, the conical sleeve (12) which is longitudinally displaceable in relation to the component (8) and the contact body (1) having a connecting part (13) which can be coupled to an actuating element which is necessary for longitudinal displacement, characterized in that for a gas-insulated high-voltage cable (2), of which the conductors (3) are disposed between the outer casing (4) and an inner casing (5) coaxial thereto, the inner casing face (17) of the contact sleeve (7) being constructed as a smooth bore of a diameter suited to the outside diameter of the cable end from which the outer casing has been removed, while the component (8) is constructed as a clamping sleeve with a frustoconical inner casing face (9) adapted to the conicity of the conical sleeve (12) and in that the conical sleeve is a draw-in cone (12) extending towards the contact stud (6) and adapted to be drawn towards the free end of the contact stud (6) by a clamping device for securely clamping the cable end, said clamping device constituting the actuating device and being adapted to be passed through the longitidinal bore (16) in the contact stud (6).

2. Device according to Patent Claim 1, characterized in that for a cable (2) of which the inner casing (5) has at least one helically encircling depression, and in that the outer casing face of the clamping sleeve (8) is provided with a screwthread which matches this depression.

3. Device according to Patent Claim 1 or 2, characterized in that as a connecting part for making connection to a draw-in bolt of the clamping device which is provided with an external screwthread, a threaded bore (13) is provided in the draw-in cone (12).

4. Device according to one of Patent Claims 1 to 3, characterized in that the cavity in the contact sleeve (7) is constructed as a cylindrical bore (17).

5. Device according to Patent Claim 3 or 4, characterized in that the contact stud bore (16) and the contact sleeve bore (17), the outer and inner casing faces (9) of the clamping sleeve (8) and the outer casing face and the threaded bore (13) of the draw-in cone (12) are in each case coaxial.

6. Device according to one of Claims 1 to 5, characterized in that a preferably screw-in closure plug (22) is provided for the outer opening in the contact stud bore (16).

7. Device according to one of Claims 1 to 6, characterized in that the contact sleeve bore (17) merges into the narrower contact stud bore (16) via a shoulder (10) which extends substantially at a right-angle to the longitudinal axis through the contact body (1), the radially measured width of the shoulder (10) being greater than the radially measured thickness of the conductors (3) and of the inner casing (5) of the cable (2).

8. Device according to one of Claims 1 to 7, characterized in that for locking of the draw-in cone (12) in the clamping sleeve (8) in the position in which the cable (2) is clamped, an O-ring (21) is provided which engages in annular slots (19, 20) in the clamping sleeve (8) and in the draw-in cone (12).

**Revendications**

1. Dispositif de connexion pour câble creux (2), dispositif qui comporte un élément de contact (1), réalisé à l'une de ses extrémités sous la forme d'un boulon de contact (6) et à son autre extrémité sous la forme d'une douille de contact (7), dans laquelle débouche un alésage longitudinal traversier (16) du boulon de contact (6), et contre la paroi intérieure de laquelle l'extrémité du câble creux (2) muni d'une enveloppe extérieure (4) peut être pressée pour l'établissement du contact au moyen d'une douille conique (12) présentant une surface d'enveloppe extérieure conique et pouvant être insérée dans la cavité centrale du câble (2), ainsi qu'au moyen d'un organe (8) entourant ladite douille et s'appliquant contre la surface d'envelope intérieure du câble, tandis que la douille conique (12) déplaçable longitudinalement par rapport à l'organe (8) et à l'élément de contact (1) présente un élément de liaison (13) pour son accouplement avec un élément d'actionnement nécessaire à son déplacement longitudinal, ledit dispositif étant caractérisé en ce que, pour un câble haute-tension isolé au moyen d'un gaz (2), dont les conducteurs (3) s'étendent entre l'enveloppe extérieure (4) et une enveloppe intérieure (5) coaxiale à celle-ci, la surface d'enveloppe intérieure (17), servant à la mise en contact du câble, de la douille de contact (7) est réalisée sous la forme d'un alésage lisse adapté dans son diamètre au diamètre extérieur de l'extrémité du câble dégagée de l'enveloppe extérieure (4), tandis que l'organe précité est réalisé sous la forme d'une douille de serrage (8) comportant une surface d'enveloppe intérieure tronconique (9) adaptée au cône de la douille conique (12), et en ce que la douille conique est un cône à tirage (12) s'étendant vers le boulon de contact (6), cône qui peut être tiré au moyen d'un dispositif de tension constituant le dispositif d'actionnement et qui peut être inséré à travers l'alésage longitudinal (16) du boulon de contact (6), pour assurer le blocage de l'extrémité du câble contre l'extrémité libre du boulon de contact (6).

2. Dispositif selon la revendication 1, caractérisé en ce que, pour un câble (2), dont l'enveloppe intérieure (5) présente au moins un évidement s'étendant hélicoïdalement, la surface d'enveloppe extérieure de la douille de serrage (8) est munie d'un filetage adapté à cet évidement.

3. Dispositif selon la revendication 1 ou la revendication 2, caractérisé en ce qu'il est prévu, comme élément de liaison, pour assurer la liaison avec un boulon de tirage du dispositif de tension, boulon qui est muni d'un filetage extérieur, un taraudage (13) dans le cône à tirage (12).

4. Dispositif suivant l'une des revendications 1 à 3, caractérisé en ce que l'espace creux de la douille de contact (7) est réalisé sous la forme d'un alésage cylindrique (17).

5. Dispositif selon la revendication 3 ou la revendication 4, caractérisé en ce que l'alésage (16) du boulon de contact et l'alésage (17) de la douille de contact, les surfaces d'enveloppe extérieure et intérieure (9) de la douille de serrage (8), ainsi que la surface d'enveloppe extérieure et le taraudage (13) du cône à tirage (12), sont tous coaciaux.

6. Dispositiv suivant l'une des revendications 1 à 5, caractérisé en ce que, pour l'ouverture extérieure de l'alésage (16) du boulon de contact, il est prévu un bouchon d'obturation (22) de préférence vissable.

7. Dispositif suivant l'une des revendications 1 à 6, caractérisé en ce que l'alésage (17) de la douille de contact se raccorde à l'alésage (16) plus étroit du boulon de contact par l'intermédiaire d'un épaulement (10) s'étendant sensiblement perpendiculairement à l'axe longitudinal de l'elèment de contact (1), épaulement dont la largeur mesurée radialement est plus grande que l'épaisseur mesurée radialement des conducteurs (3) et de l'enveloppe intérieure (5) du câble (2).

8. Dispositif suivant l'une des revendications 1 à 7, caractérisé en ce que pour assurer le verrouillage du cône à tirage (12) dans la douille de serrage (8) dans la position de serrage du câble (2), il est prévu un anneau torique (21) engagé dans des rainures annulaires (19, 20) de la douille de serrage (8) et du cône à tirage (12).